# EUROPEAN PATENT SPECIFICATION

(11) **EP 1 220 555 B1**
(45) Date of publication and mention of the grant of the patent: **30.12.2009**
(21) Application number: 00964283.6
(22) Date of filing: 22.09.2000
(51) Int. Cl.: H04L 12/24, H04N 1/00

(54) **AUTONOMOUS SMS REMOTE MANAGEMENT DEVICE FOR PRINTERS, COPIERS AND FAX MACHINES**
AUTONOME FERNVERWALTUNGSVORRICHTUNG VON DRUCKERN, KOPIERERN UND FAX-MASCHINEN VIA SMS
DISPOSITIF AUTONOME DE GESTION A DISTANCE D'IMPRIMANTES, DE PHOTOCOPIEUSES ET DE TELECOPIEURS VIA SMS

(30) Priority: 23.09.1999 ES 9902109; 01.08.2000 ES 200001959
(43) Date of publication of application: 03.07.2002
(73) Proprietor: Pulsar Technologies, S.A., E-28230 Las Rozas (Madrid) (ES)
(72) Inventor: ALVAREZ-BARON STOOF, Santiago, E-28043 Madrid (ES)
(74) Representative: Carpintero Lopez, Francisco
(86) International application number: PCT/ES2000/000356
(87) International publication number: WO 2001/022691

(56) References cited:
- WO-A1-97/36435
- WO-A1-98/19447

## Description

### OBJECT OF THE INVENTION

The present invention relates to an electronic device which allows remote management of remote units preferably printers, copiers and/or fax machines by the SMS service.

Within a framework of a company with several printers, copiers and/or faxes (henceforth remote units) rented throughout a certain geographical area, and which requires awareness of several internal data on each remote unit for their management, with this system it is not necessary for a worker to travel to obtain such data, with the ensuing savings in time and money. The renting company or individual will also benefit from the supervision of the units without the need to receive visits unless mechanical maintenance is required.

With the device of the invention data acquisition signals are sent to each remote unit from a central station. From these data is obtained information on the number of printed pages, status of toner or cartridge, status of the remote unit, possible malfunctions and any information which the remote unit allows to obtain. Additionally, the device may receive data directly from the remote unit without the latter being previously queried by the device. This information is interpreted by the device and sent to a central station.

The device is meant to be operate autonomously, that is, without requiring a compatible computer connected to the remote unit. It is comprised by three modules: the GSM terminal, the central processing unit and the case.

### BACKGROUND OF THE INVENTION

Currently, remote management of remote units would require each one to be connected to a computer, which in turn would have to be connected to any of the various communication networks available. These include for example VSAT radio networks, conventional fixed telephone networks, mobile telephone networks, etc.

The system here described eliminates the need for connecting a PC and optimises remote communication by using the SMS service of the GSM network. By this service the customer is not required to have a telephone line and its cost is substantially lower than that of a VSAT network, or clearly simpler than implementing a radio operated controller for the entire geographical area to be covered, as well as cheaper than this latter option as the infrastructure is already set up and shared for other uses, mainly mobile audio communications by GSM, GSM stage 2 and by UMTS.

This is therefore a novelty, as an electronic device is created designed to be connected to printers, copiers or faxes which allows to receive and send data with short messages.

The publication WO98/19447 describes a telecommunications interface and associated method for collecting and transmitting data, which comprises devices for collecting said data and converting the data into digital data, which are digitally transmitted over a digital communication network. The interface and method described therein has nothing to do with an autonomous remote device for monitoring, by using messages SMS, remote devices such as printers or copiers, as the one claimed in the present application.

The publication WO 97/36435 reveals a method and apparatus for transmitting data via a cellular mobile radiotelephone system, which mainly describes the data distribution through a telecommunication network. No teaching can be found in this document concerning an autonomous device for remote management of equipment.

### DESCRIPTION OF THE INVENTION

The electronic device disclose consists of three main modules: an SMS terminal; a controlling card; and the case itself.

The function of the SMS terminal is to receive and send short messages. It may be embodied by conventional mobile sets provided with a specific control software, or by GSM, GSM stage 2 or UTSM modems which already include such software. Each terminal is associated to a telephone number which identifies the printer.

The controlling card allows to control the SMS terminal and the remote unit without requiring a computer. It comprises a processing unit such as a Motorola 68hc11 8 bit microcontroller or its equivalent, and a set of peripheral integrated circuits which define the following functions for the system:
1) the series connection of the SMS terminal by a UART or its technological equivalent for this purpose
2) connection to the remote unit by a port extension chip, such as integrated 8255.
3) Storage of the program and data in a local memory.
4) Management of the error protection and power system.

The case is the third element involved, and although it is not part of the electronics it does incorporate the required connections for the cables of the remote unit, as well as a magnetised surface for attachment to a side of said unit.

The prefered use of the autonomous remote device is the management of printers, copiers and/or fax machines, but the autonomous device could be also used for management of other type of remote units. As non limiting examples, the following units can be mentioned: pay per view digital television decoders (in which the device may activate reception of channels without recurring to the conventional fixed telephone line as previously, as well as other functions which the remote unit allows for management and billing of the various services associated), motor vehicles (in which the number of kilometres travelled can be monitored for purposes of maintenance or billing by distance travelled, or to remotely check the state of the vehicle, or block it due to theft, as well as other functions which the remote unit allows for management and billing of the various services associated), supply counters for gas, electricity or water (for performing the reading without having to send workers or to provide credit to continue consumption, such as by allowing the customer to prepay a certain amount of water, gas or electricity supply, as well as other functions which the remote unit allows for management and billing of the various services associated), elevators (for monitoring their operational status and program maintenance, sending rescue personnel if the alarm is activated, as well as other functions which the remote unit allows for management and billing of the various services associated), ships (for monitoring their operational status, and programming their maintenance, as well as other functions which the remote unit allows), industrial machinery (for monitoring their operational status, and programming maintenance, checking cycle counters for later billing by usage, as well as other functions which the remote unit allows for management and billing of the various services associated), property protection alarms (to send an alarm signal to the central station without requiring the use of a conventional telephone line, monitoring the status of the installation, as well as other functions which the remote unit allows for management and billing of the various services associated), computers, both personal and servers, "thin clients" and others (to measure the use of hardware or applications used by it, and the status and versions of these, as well as other functions which the remote unit allows for later billing for use and management and billing of the various services associated).

### PREFERRED EMBODIMENT OF THE INVENTION

A typical operation scheme for the system is as follows. When data is desired from one of the distributed remote units, a short message is sent from the central station with the instruction for obtaining said data to the telephone number associated to the remote nit. The device connected to the remote unit will receive the short message and process it, immediately sending the instruction to the remote unit. This unit shall supply the data requested sending it to the device, where it is processed and then sent to the central station via another short message.

Additionally, when the remote unit detects a malfunction or is low on toner, or simply after reaching a set number of cycles (or copies), it generates an instruction which is received by the device, which processes it and sends it to the central station by an SMS short message.

## Claims

1. Autonomous remote management device by SMS for management of remote units from a central station, the remote units being printers, copiers and/or fax machines, **characterised in that** it comprises a SMS terminal and a controlling card, and it is connected directly and through a connector to the remote unit and interprets instructions received from the central station by radio in SMS message format, transmits these instructions to the remote unit , receives a reply from the remote unit and interprets said reply and sends it to the central station via radio in an SMS message format.

2. Autonomous remote management device by SMS for management of remote units as claimed in claim 1, **characterised in that** the SMS terminal and the controlling card are integrated as a single unit.

3. Autonomous remote management device by SMS for management of remote units as claimed in claim 1 or 2 , **characterised in that** the SMS terminal and the controlling card are housed in a single case.

4. Autonomous remote management device by SMS for management of remote units as claimed in claim 1, **characterised in that** the SMS terminal and the controlling card are inserted in the remote unit.

5. Autonomous remote management device by SMS for management of remote units as claimed in claim 2,
**characterised in that** the SMS terminal and the controlling unit are inserted in the remote unit.

## Patentansprüche

1. Autonome management Ferngerät wird per SMS für management von Ferngeräte aus einer Zentralstation, die Ferngeräte sind Drucker, Kopierer und/oder Faxmaschinen, **gekennzeichnet** indem sie ein SMS-Terminal und eine Kontrollkarte, und es direkt und durch eine Verbindung mit den Ferngeräten verbunden ist und interpretiert Befehle per Radio die aus der Zentralstation stammen in Form einer SMS Mitteilung, überträgt diese Befehle zum Ferngerät, erhält eine Antwort vom Ferngerät und interpretiert die gesendete Antwort und sendet diese zur Zentralstation per Radio in Form einer SMS Mitteilung.

2. Autonome management Ferngerät per SMS für management von Ferngeräte wie angesprochen in Forderung 1, **gekennzeichnet** indem das SMS-Terminal und die Kontrollkarte als eine ganze Einheit vorkommen.

3. Autonome management Ferngerät per SMS für management von Ferngeräte wie angesprochen in Forderung 1 oder Forderung 2, **gekennzeichnet** indem das SMS-Terminal und die Kontrollkarte sind "housed in a single case".

4. Autonome management Ferngerät per SMS für management von Ferngeräte wie angesprochen in Forderung 1, **gekennzeichnet** indem das SMS-Terminal und die Kontrollkarte im Ferngerät integriert sind.

5. Autonome management Ferngerät per SMS für management von Ferngeräte wie angesprochen in Forderung 2, **gekennzeichnet** indem das SMS-Terminal und die Kontrollkarte im Ferngerät integriert sind.

## Revendications

1. Appareil de gestion autonome à distance via SMS pour la gestion à partir d'une station centrale d'unités placée à distance. Ces unités placées à distance étant imprimantes, copieurs et/ou des fax. L'appareil de gestion autonome comprend un terminal SMS et un circuit contrôleur, et il est connecté directement et à travers d'un connecteur aux unités places à distance, et interprète les instructions reçues de la station central par radio sous format message SMS, transmets ces instructions aux unités places à distante, reçois une réponse de ces unités, l'interprète et renvois une réponse vers la stations centrale sous un format message SMS.

2. Appareil de gestion autonome à distance via SMS pour la gestion d'unités placée à distance tel que c'est réclamé sous la revendication 1, avec la variante d'avoir le terminal SMS et le circuit contrôleur intégrés dans une même unité.

3. Appareil de gestion autonome à distance via SMS pour la gestion d'unités placée à distance tel que c'est réclamé sous les revendications 1 et 2, avec la variante d'avoir le terminal SMS et le circuit contrôleur emboités dans une même boite.

4. Appareil de gestion autonome à distance via SMS pour la gestion d'unités placée à distance tel que c'est réclamé sous la revendication 1, avec la variante d'avoir le terminal SMS et le circuit contrôleur insérés dans la/les unité/s placée/s à distance.

5. Appareil de gestion autonome à distance via SMS pour la gestion d'unités placée à distance tel que c'est réclamé sous la revendication 2, avec la variante d'avoir le terminal SMS et le circuit contrôleur insérés dans la/les unité/s placée/s à distance.
